# DEMANDE DE BREVET EUROPEEN

(11) **EP 2 113 759 A1**
(43) Date de publication de la demande: **04.11.2009**
(21) Numéro de dépôt: 08155390.1
(22) Date de dépôt: 29.04.2008
(51) Int. Cl.: G01L 7/08, G04B 47/06, G04G 1/04

(54) **Capteur de pression ayant une membrane comprenant un matériau amorphe**

(71) Demandeur: The Swatch Group Research and Development Ltd., 2074 Marin (CH)
(72) Inventeur: Winkler, Yves, 3185, Schmitten (CH); Meylan, Frédéric, 2000, Neuchâtel (CH); Grupp, Joachim, 2073, Enges (CH)
(74) Mandataire: Couillard, Yann Luc Raymond

(57) **Abrégé**

L'invention se rapporte à un capteur de pression (6). Ce capteur de pression (6) comprend une membrane (11) flexible coopérant avec un dispositif de transmission (10) permettant à partir de la déformation de la membrane (11) de fournir une valeur représentative de la pression. La membrane (11) est réalisée en matériau au moins partiellement amorphe afin d'optimiser les dimensions dudit capteur (6).

## Description

La présente invention concerne un capteur de pression utilisant une membrane flexible. Cette membrane coopère avec un dispositif de transmission permettant à partir de la déformation de ladite membrane de fournir une valeur représentative de la pression.

### ARRIERE PLAN TECHNOLOGIQUE

Il est connu dans l'art antérieur une montre de plongée comprenant un boîtier 21 qui porte un capteur de pression comprenant une membrane et un dispositif de transmission. La membrane est capable de se déformer mécaniquement sous l'effet de la pression extérieure agissant alors sur le dispositif de transmission. Ce dispositif transfert ainsi ledit mouvement de déformation représentatif de la pression afin d'être, par exemple, amplifié dans le but d'afficher la valeur de la pression détectée par le capteur.

Généralement la membrane de ce capteur est réalisée en matériau cristallin tel que, par exemple, un alliage composé de Cuivre et de Béryllium (Cu-Be).

Chaque matériau se caractérise par son module d'Young E également appelé module d'élasticité (exprimé généralement en GPa), caractérisant sa résistance à la déformation. De plus, chaque matériau est aussi caractérisé par sa limite élastique σₑ (exprimée généralement en GPa) qui représente la contrainte au-delà de laquelle le matériau se déforme plastiquement. Ainsi, il est possible, pour une épaisseur donnée, de comparer les matériaux en établissant pour chacun le rapport de leur limite élastique sur leur module d'Young σₑ/E, ledit rapport étant représentatif de la déformation élastique de chaque matériau. Ainsi plus ce rapport est élevé plus la déformation élastique du matériau est élevée. Or les matériaux cristallins tels qu'utilisés dans l'art antérieur, par exemple, l'alliage Cu-Be, dont le module d'Young E est égal à 130 GPa et ayant une limite d'élasticité σₑ valant typiquement 1 GPa, donne un rapport σₑ/E faible c'est-à-dire de l'ordre de 0,007. Ces membranes en alliage cristallin possèdent, par conséquent, une déformation élastique limitée. Dans le cas de la membrane d'un capteur de pression, cela implique une plage de mesure qui est limitée.

De plus du fait de cette limite élastique qui est basse, la membrane lorsqu'elle se déforme, approche sa région de déformation plastique sous faibles contraintes avec le risque qu'elle ne puisse reprendre sa forme initiale. Pour éviter de telle déformation, une limitation de la déformation de la membrane est réalisée, c'est-à-dire que l'amplitude du mouvement de la membrane est volontairement bornée. On comprend alors qu'il soit nécessaire d'amplifier le mouvement de transfert. Cela entraîne alors un bruit qui est néfaste au capteur de pression et, incidemment, à l'affichage de la valeur de pression.

### RESUME DE L'INVENTION

L'invention concerne un capteur de pression qui pallie les inconvénients susmentionnés de l'art antérieur en proposant une membrane plus fiable ayant une marge de sécurité par rapport à la contrainte maximale appliquée mais aussi d'avoir une possibilité d'amplitude de déformation plus importante. Alternativement, l'invention propose une membrane permettant une amplitude de déformation équivalente pour des dimensions qui sont plus faibles.

A cet effet, l'invention concerne le capteur de pression cité ci-dessus qui se **caractérise en ce que** la membrane est réalisée en matériau au moins partiellement amorphe. Des modes de réalisation avantageux de ce capteur font l'objet des revendications dépendantes 2 à 11.

Un premier avantage de la membrane selon la présente invention est qu'elle possède des caractéristiques élastiques plus intéressantes. En effet, dans le cas d'un matériau amorphe, le rapport σₑ/E est augmenté par élévation de la limite élastique σₑ. Ainsi, le matériau voit donc la contrainte, au-delà de laquelle il ne reprend pas sa forme initiale, augmenter. Cette amélioration du rapport σₑ/E permet alors une déformation plus importante. Cela permet d'optimiser les dimensions de la membrane selon que l'on veuille augmenter la plage de mesure de la membrane ou alors réduire la taille de ladite membrane pour une plage de mesure équivalente.

Un autre avantage de ces matériaux amorphes est qu'ils ouvrent de nouvelles perspectives de mise en forme permettant l'élaboration de pièces aux formes compliquées avec une plus grande précision. En effet, les métaux amorphes ont la caractéristique particulière de se ramollir tout en restant amorphe dans un intervalle de température [Tx - Tg] donné propre à chaque alliage (avec Tx : température de cristallisation et Tg : température de transition vitreuse). Il est ainsi possible de les mettre en forme sous une contrainte relativement faible et à une température peu élevée. Cela permet alors de reproduire très précisément des géométries fines car la viscosité de l'alliage diminue fortement et ce dernier épouse ainsi tous les détails du moule.

De plus, l'invention concerne également une montre qui se **caractérise en ce qu**'elle comprend un capteur de pression dont la membrane est conforme à l'explication ci-dessus. Un mode de réalisation avantageux de cette montre fait l'objet de la revendication dépendante 13.

### BREVE DESCRIPTION DES FIGURES

Les buts, avantages et caractéristiques de la montre selon la présente invention apparaîtront plus clairement dans la description détaillée suivante d'au moins une forme de réalisation de l'invention donnée uniquement à titre d'exemple non limitatif et illustrée par les dessins annexés sur lesquels :
- la figure 1 représente de manière schématique une vue en coupe d'une montre comprenant la membrane selon la présente invention ;
- la figure 2 représente de manière schématique une vue en coupe d'une montre comprenant la membrane selon la présente invention lorsque celle-ci subit une pression extérieure ;
- la figure 3 représente de manière schématique un mode de réalisation préféré de la membrane selon la présente invention ;
- la figure 4 représente une montre comprenant la membrane selon ledit mode de réalisation préféré; et
- la figure 5 représente les courbes de déformation pour un matériau cristallin et pour un matériau amorphe.

### DESCRIPTION DETAILLEE

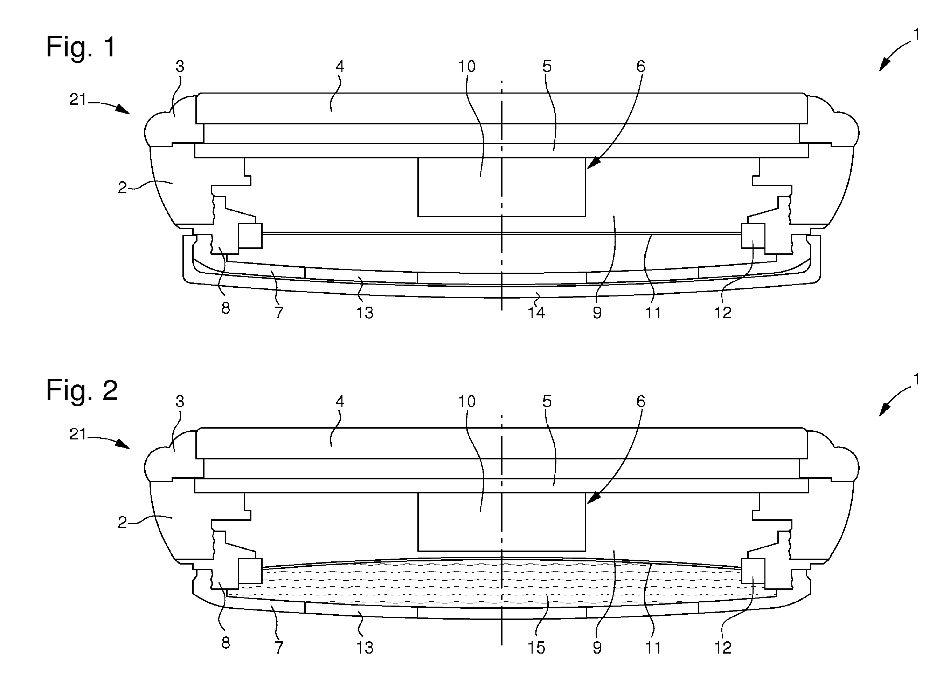

Les figures 1 et 2 représentent une vue en coupe d'une montre de plongée 1 composée d'une carrure 2 sur laquelle est fixée une lunette 3 portant la glace 4 de la montre 1. En dessous de la glace 4 est agencé un dispositif d'affichage 5 également fixé à la carrure 2.

La montre 1 est fermée par un fond 7 fixé de façon étanche sur une pièce intermédiaire 8 elle-même fixée de façon étanche sur la carrure 2, formant ainsi un boîtier. La montre comprend également un capteur de pression 6 situé préférentiellement à l'intérieur de ce boîtier 21.

Le capteur de pression 6 comprend un dispositif de transmission 10 ainsi qu'une membrane 11 montée de sorte à former une cavité étanche 9. La membrane 11 est située à l'intérieur du boîtier 21 de montre 1 et fixée sur un support 12 au niveau de sa périphérie. Cela permet d'assurer une bonne déformation de la membrane 11. Le support 12 est, dans notre exemple, fixé à la pièce intermédiaire 8. Afin que la membrane 11 soit au contact de l'environnement extérieur, il est prévu que le fond 7 du boîtier 21 soit percé de plusieurs orifices 13. Ces orifices 13 permettent de déformer la membrane si la pression de part et d'autre de la membrane 11 est différente, comme représenté à la figure 2.

Par ailleurs, il peut être prévu que le fond 7 du boîtier 21 soit muni d'un capot amovible 14 pouvant être fixé par encliquetage afin d'obstruer les orifices 13 lorsqu'une mesure de pression n'est pas demandée. Cela permet une protection du capteur de pression 6.

Pour le fonctionnement du capteur de pression 6, le dispositif de transmission 10 est utilisé de concert avec ladite membrane 11. Ainsi sous l'effet de la différence de pression entre la cavité étanche 9 et l'environnement extérieur, la membrane 11 va se déformer plus ou moins. En effet, si la pression extérieure est plus importante que la pression à l'intérieur de la cavité étanche 9, alors la membrane 11 va se déformer de sorte à rétrécir le volume de la cavité étanche 9 comme visible à la figure 2.

Cette déformation de la membrane 11 va agir sur le dispositif de transmission 10 qui va détecter la position de la membrane 11 par rapport à sa position initiale. La position initiale est préférentiellement celle dans laquelle les pressions de part et d'autre de la membrane 11 sont égales. Une fois que la détection est réalisée, le dispositif de transmission 10 va transmettre cette déformation de la membrane 11, par exemple, par un mouvement mécanique.

Ce mouvement représentatif de la pression, transmis par le dispositif 10, peut alors être éventuellement amplifié puis utilisé par le dispositif d'affichage 5. Ce dernier va alors utiliser un moyen de conversion de ce mouvement représentatif de la déformation, et donc de la pression, en une valeur de profondeur. Ensuite, ce dispositif 5 va afficher la profondeur mesurée par ledit capteur de pression 6. Bien entendu, il peut être prévu que la détection de la pression soit effectuée par tout autre moyen tel qu'un dispositif transducteur à effet piézo-électrique. De plus, d'autres fonctions qui utilisent la pression telle qu'une fonction altimètre ou météo peuvent être envisagées.

Les éléments du capteur 6 sont donc calibrés selon un cahier des charges prédéterminé définissant la plage de mesure souhaitée à la course de la membrane 11. La plage de mesure souhaitée représente la valeur maximale de la pression que l'on veut pouvoir détecter et afficher, par exemple une profondeur de 100 mètres. La course de la membrane 11 définit la déformation maximale que peut prendre ladite membrane 11. Ainsi, à partir de ces deux valeurs, les caractéristiques de la membrane 11 sont alors définies. Celle-ci se caractérise par ses dimensions (diamètre et épaisseur dans le cas d'une membrane 11 circulaire du présent exemple) et par le matériau dont elle est constituée.

Avantageusement selon l'invention, la membrane 11 comporte un matériau amorphe ou partiellement amorphe. En particulier, on utilise des verres métalliques c'est-à-dire des alliages métalliques amorphes pour la réalisation de la membrane 11.

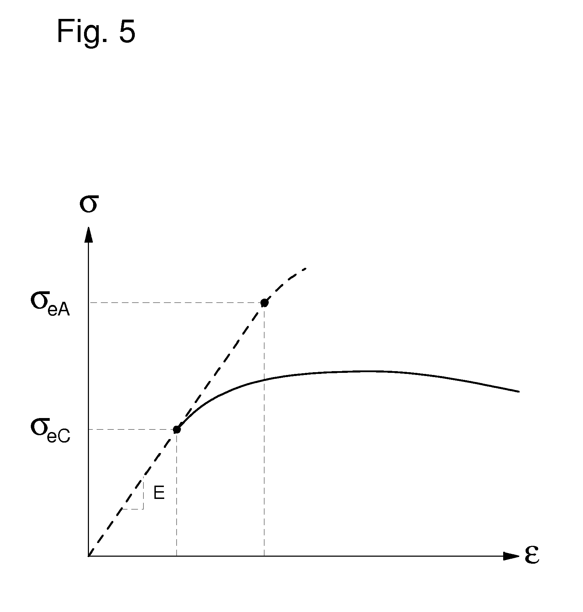

En effet, l'avantage, en termes de déformation de ces alliages métalliques amorphes, vient du fait que lors de leur fabrication, les atomes composant ce matériau amorphe ne s'arrangent pas selon une structure particulière comme c'est le cas pour les matériaux cristallins. Ainsi même si le module d'Young E d'un matériau cristallin et d'un matériau amorphe est identique, la limite élastique, σₑ, est différente. En effet, le matériau amorphe se différencie par une limite élastique σₑₐ plus élevée que celle du matériau cristallin d'un rapport sensiblement égal à deux, comme représenté sur la figure 5. Cette figure représentant la courbe de la contrainte σ en fonction de la déformation ε pour un matériau amorphe (en pointillé) et pour un matériau cristallin. Cela permet aux matériaux amorphes de pouvoir subir une plus forte contrainte avant d'arriver à la limite élastique σₑ.

En premier lieu, cette membrane 11 en matériau amorphe permet alors d'améliorer la fiabilité du capteur de pression 6 par rapport à une membrane 11 en matériau cristallin. En effet, la limite élastique σₑₐ est plus élevée ce qui rend la région plastique plus éloignée et donc diminue le risque de déformer plastiquement la membrane.

De plus, cette aptitude à supporter élastiquement une plus forte contrainte permet d'envisager une plage de mesure supérieure.

De plus, de manière avantageuse, on constate qu'une membrane 11 en matériau amorphe permet également pour une même contrainte appliquée centralement, l'optimisation de son dimensionnement afin de couvrir une course équivalente. En effet, les dimensions de la membrane 11 modifient sa déformation. Ainsi, si le diamètre augmente alors la course théorique de la membrane 11 augmente. De plus, si l'épaisseur augmente, la course théorique de la membrane 11 diminue. Avantageusement, avec une limite élastique qui augmente, la contrainte pouvant être appliquée à la membrane 11, sans déformation plastique, augmente. Il devient alors possible de garder la même amplitude de mouvement en réduisant son diamètre et son épaisseur.

Concernant le matériau en lui-même, on peut tout d'abord considérer que plus le rapport σₑ/E est élevé, plus le capteur est efficace. Avantageusement, les matériaux dont le rapport σₑ/E est supérieur à 0,01 sont les matériaux les plus appropriés pour réaliser une membrane 11 de capteur de pression. On peut également préciser que hormis le rapport σₑ/E, la valeur de E peut être également choisie afin d'être supérieure à une certaine limite, ceci afin que le capteur de pression puisse être contenu dans un volume acceptable. Préférentiellement, cette limite est fixée à 50 G Pa.

Ensuite un certain nombre de caractéristiques peuvent être pris en compte. Ainsi on peut considérer que les caractéristiques de résistance à la corrosion et d'amagnétisme sont intéressantes surtout pour une montre de plongée. On pourra alors citer comme exemples de matériaux amorphes pouvant être utilisé. Ainsi à titre d'exemple le Zr41Ti14Cu12Ni10Be23 dont le module d'Young E vaut 105 GPa et la limite élastique vaut σₑ= 1,9 GPa, comporte un rapport σₑ/E = 0,018 et le Pt57.5Cu14.7Ni5.3P22.3 dont le module d'Young E vaut 98 GPa et la limite élastique vaut σₑ= 1,4 GPa comporte un rapport σₑ/E = 0,014.

Bien sûr, il existe d'autres caractéristiques qui peuvent être intéressantes telles que l'aspect allergène de l'alliage. En effet, on peut remarquer que les matériaux qu'ils soient cristallins ou amorphes utilisent souvent des alliages comprenant des éléments allergènes. Par exemple, de tels types d'alliages comportent du Cobalt, du Béryllium ou du Nickel. Ainsi, des variantes de la membrane 11 selon la présente invention peuvent être réalisées avec des alliages ne contenant pas ces éléments allergènes. On peut aussi prévoir que des éléments allergènes soient présents mais que ceux-ci ne provoquent pas de réaction allergène. Pour cela, on peut prévoir que la membrane 11 qui contient ces éléments allergènes ne les relâche pas lorsque la corrosion attaque la membrane 11.

Selon une autre variante de l'invention, il peut être prévu que la membrane 11 soit réalisée en matériau noble. Effectivement, à l'état cristallin, les matériaux nobles tels que l'or ou le platine sont trop mous pour permettre la réalisation d'une membrane 11 flexible et robuste. Mais dès lors qu'ils se présentent sous la forme de verre métallique, c'est-à-dire à l'état amorphe, ces métaux précieux sont alors dotés de caractéristiques telles que leur utilisation pour la fabrication d'une membrane 11 pour un capteur de pression devient possible tout en proposant un aspect précieux et esthétique. De façon préférentielle, le platine 850 (Pt 850) et l'or 750 (Au 750) sont les métaux précieux qui seront utilisés pour la réalisation de ladite membrane 11. Bien sûr, d'autres métaux précieux pourront être utilisés tels que du palladium, rhénium, ruthénium, rhodium, argent, iridium et osmium.

On peut également constater que les alliages métalliques amorphes possèdent une facilité de mise en forme. En effet, les métaux amorphes ont la caractéristique particulière de se ramollir tout en restant amorphe dans un intervalle de température (Tx - Tg) donné propre à chaque alliage. Il est ainsi possible de les mettre en forme sous une contrainte relativement faible et à une température pas trop élevée.

Ce procédé consiste en un formage à chaud d'une préforme amorphe. Cette préforme est obtenue par fusion des éléments métalliques constituant l'alliage amorphe dans un four. Cette fusion est faite sous contrôle avec pour but d'obtenir une contamination de l'alliage en oxygène aussi faible que possible. Une fois ces éléments fondus, ils sont coulés sous forme de semi produit, comme par exemple un disque de dimension proche de la membrane 11, puis refroidis rapidement afin de conserver l'état amorphe. Une fois la préforme réalisée, le formage à chaud est réalisé dans le but d'obtenir une pièce définitive. Ce formage à chaud est réalisé par pressage dans une gamme de température comprise entre Tg et Tx durant un temps déterminé pour conserver une structure totalement ou partiellement amorphe. Ceci est fait dans le but de conserver les propriétés élastiques caractéristiques des métaux amorphes. Les différentes étapes de mise en forme définitive de la membrane 11 sont alors :
a) Chauffage des matrices ayant la forme négative de la membrane 11 jusqu'à une température choisie,
b) Introduction de disque en métal amorphe entre les matrices chaudes,
c) Application d'une force de fermeture sur les matrices afin de répliquer la géométrie de ces dernières sur le disque en métal amorphe,
d) Attente durant un temps maximal choisi,
e) Ouverture des matrices,
f) Refroidissement rapide de la membrane 11 en dessous de Tg, et
g) Sortie de la membrane 11 des matrices.

Ce mode de mise en forme permet de reproduire très précisément des géométries fines car la viscosité de l'alliage diminue fortement, ce dernier épousant ainsi tous les détails du moule. L'avantage de cette méthode est qu'il n'y a pas de retrait de solidification ce qui permet d'avoir une pièce plus précise, réalisée à une température moins élevée que par injection.

Bien entendu, d'autres types de mise en forme sont possibles comme la mise en forme par injection. Ce procédé consiste à mouler l'alliage obtenu par fusion des éléments métalliques dans un four, sous la forme d'une pièce quelconque telle qu'un barreau et cela dans un état cristallin ou amorphe, peu importe. Puis cette pièce de forme quelconque en alliage est de nouveau fondue pour être injectée dans un moule possédant la forme de la pièce définitive. Une fois le moule rempli, celui-ci est refroidi rapidement jusqu'à une température inférieure à Tg afin d'éviter la cristallisation de l'alliage et ainsi obtenir une membrane 11 en métal amorphe ou semi-amorphe.

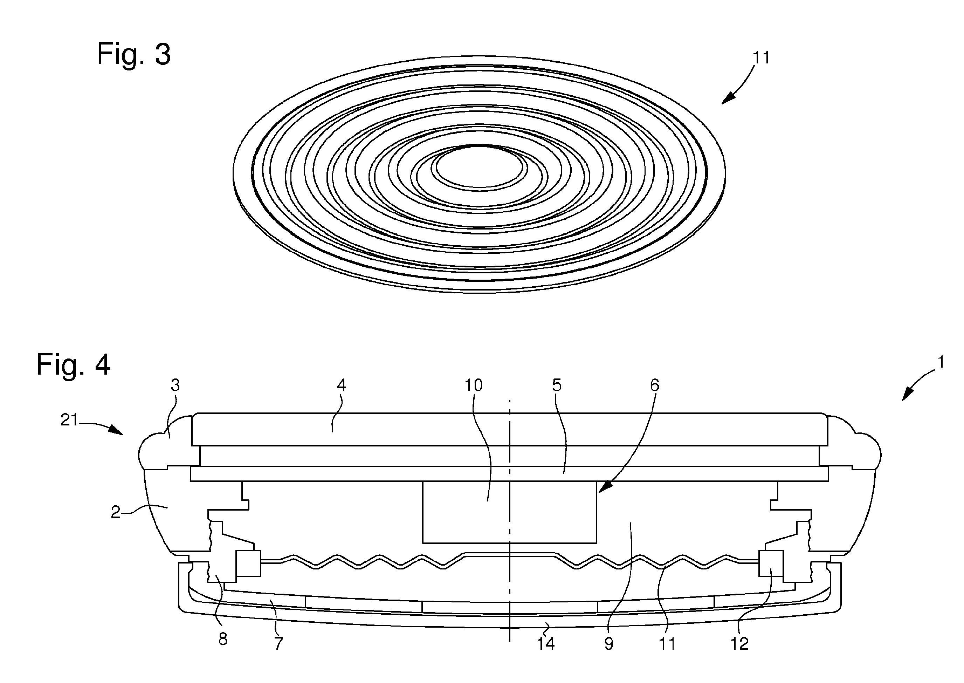

Ainsi, il est donc possible de former la membrane 11 selon la géométrie désirée. Par exemple, il est possible de modeler la section de la membrane 11 afin d'en modifier les propriétés au même titre que son épaisseur ou son diamètre. A titre d'exemple, il est possible de mouler la membrane 11 afin d'obtenir une section sinusoïdale comme représentée aux figures 3 et 4. Une telle forme permet l'augmentation de la surface de la membrane 11 mais aussi de sa rigidité. La membrane 11 est donc plus dure à déformer. Cette agencement de la section permet, avantageusement, également de linéariser la déformation élastique du matériau en fonction de la pression. Cette linéarisation est alors une aide pour simplifier les moyens de conversion de la déformation de la membrane 11 en valeur de pression.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées. Par exemple, la membrane est de forme différente.

## Revendications

1. Capteur de pression (6) comprenant une membrane (11) flexible coopérant avec un dispositif de transmission (10) permettant à partir de la déformation de ladite membrane (11) de fournir une valeur représentative de la pression, **caractérisé en ce que** la membrane (11) est réalisée en matériau au moins partiellement amorphe afin d'optimiser les dimensions dudit capteur.

2. Capteur de pression selon la revendication 1, **caractérisé en ce que** la membrane (11) est réalisée en matériau totalement amorphe.

3. Capteur de pression selon les revendications 1 ou 2, **caractérisé en ce que** le matériau comporte un rapport de la limite élastique sur son module d'Young supérieur à 0,01.

4. Capteur de pression selon la revendication 3 **caractérisé en ce que** le matériau comporte un module d'Young supérieur à 50GPa.

5. Capteur de pression selon les revendications 1 à 4 **caractérisé en ce que** le matériau comporte au moins un élément métallique.

6. Capteur de pression selon la revendication 5 **caractérisé en ce que** ledit au moins un élément métallique est du type précieux ou un des ces alliages.

7. Capteur de pression selon la revendication 6 **caractérisé en ce que** ledit élément métallique précieux comporte de l'or, du platine, du palladium, du rhénium, du ruthénium, du rhodium, de l'argent, de l'iridium ou de l'osmium.

8. Capteur de pression selon l'une des revendications précédentes **caractérisé en ce que** ledit matériau ne relâche pas d'élément allergène.

9. Capteur de pression selon l'une des revendications précédentes, **caractérisé en ce que** la membrane (11) est sensiblement discoïdale et fixée au dit capteur (6) par sa périphérie.

10. Capteur de pression selon l'une des revendications précédentes, **caractérisé en ce que** la membrane (11) possède une section non rectiligne afin d'augmenter sa surface de déformation.

11. Capteur de pression selon la revendication 10 **caractérisée en ce que** la section de la membrane (11) comporte au moins une partie sinusoïdale.

12. Montre, **caractérisée en ce qu'**elle comprend un capteur de pression (6) conforme à l'une des revendications 1 à 11.

13. Montre selon la revendication 12, **caractérisée en ce qu'**elle comprend en outre un moyen de conversion de ladite valeur représentative de la pression en une valeur de profondeur permettant à ladite montre d'effectuer une fonction profondimètre.
